(19) Europäisches Patentamt
European Patent Office
Office européen des brevets

(11) Publication number: **0 422 237 A1**

# (12) EUROPEAN PATENT APPLICATION published in accordance with Art. 158(3) EPC

(21) Application number: **90904651.8**

(51) Int. Cl.5: **C09B 67/26**, D06P 3/66

(22) Date of filing: **15.03.90**

(86) International application number: **PCT/JP90/00337**

(87) International publication number: **WO 90/10676 (20.09.90 90/22)**

(30) Priority: **16.03.89 JP 62117/89**

(43) Date of publication of application: **17.04.91 Bulletin 91/16**

(84) Designated Contracting States: **CH DE GB LI**

(71) Applicant: **NIPPON KAYAKU KABUSHIKI KAISHA**
**11-2, Fujimi 1-chome Chiyoda-ku**
**Tokyo 102(JP)**

(72) Inventor: **YAMANAKA, Nobuyuki**
**2-3-13, Ohi Shinagawa-ku**
**Tokyo 140(JP)**
Inventor: **OGAWA, Eiichi**
**1363-9, Ushijima Kasukabe-shi**
**Saitama 344(JP)**

(74) Representative: **Türk, Gille, Hrabal**
**Brucknerstrasse 20**
**W-4000 Düsseldorf 13(DE)**

## (54) LIQUID COMPOSITION AND METHOD OF DYEING THEREWITH.

(57) This invention is directed to a storage-stable liquid composition of a reactive dye containing a compound represented by formula (1) and a method of dyeing cellulosic fibers with said composition. In said formula, M stands for an alkali metal and R for an alkyl group.

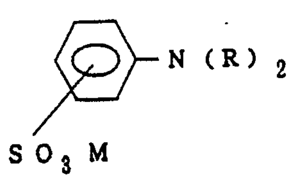

(1)

EP 0 422 237 A1

# LIQUID COMPOSITION AND DYEING METHOD USING IT

## TECHNICAL FIELD

The present invention relates to a liquid composition of a dye and a method for dyeing with the composition. More particularly, it relates to a liquid composition of a reactive dye which is superior in storage stability and a method for dyeing cellulose fibers using it.

## BACKGROUND ART

Dye compositions in the form of solution or slurry are widely used in dyeing industries because of their advantages that they generate little dusts as compared with powdery dye compositions and are suitable for metering by automatic liquid preparation apparatus and the like. However, in many cases, liquid compositions are inferior to powdery compositions in view of decomposition of dye and precipitation of crystal during storage of long period. Especially, liquid compositions of reactive dyes are apt to cause the problem that reactive groups of the dye undergo hydrolysis (self-decomposition) during storage to lose reactivity with fiber to cause reduction in degree of exhaustion. Therefore, in preparation of a liquid composition of reactive dye, phosphate such as sodium phosphate is often used as a chemical (buffering agent) for keeping pH constant.

Use of phosphate in preparation of liquid composition of reactive dye suffers from the problems that phosphates are insufficient in inhibiting decomposition of reactive group of reactive dye and besides, when liquid composition containing a phosphate is stored for a long time, phosphate per se is crystallized or phosphate crystallizes the reactive dye. When dyeing is carried out using such dye, good results cannot be obtained in view of color value and level-dyeing property.

## DISCLOSURE OF THE INVENTION

As a result of intensive research conducted by the inventors on additives for preparation of liquid compositions of reactive dyes to be substituted for phosphates, which may bring about the above-mentioned problems, it has been found that a liquid composition of reactive dye containing a compound represented by the following formula (1):

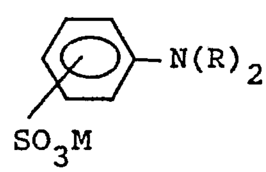

(1)

wherein M represents an alkali metal and R represents an alkyl undergoes no decomposition of reactive dye and shows very high stability with time and that when dyeing is carried out with the liquid composition, neither reduction of color value nor unlevel dyeing occurs and thus excellent dyed products are provided. The present invention has been accomplished based on this finding.

That is, construction of the present invention is as follows:

(I) A liquid composition of reactive dye, characterized by containing a compound represented by the following formula (1):

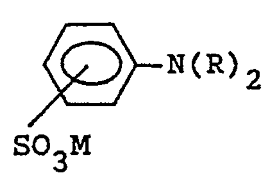

(1)

wherein M represents an alkali metal and R represents an alkyl.

(II) A method for dyeing cellulose fibers, characterized by using the liquid composition according to claim 1.

As a result of employing such construction by the present invention, a stable liquid composition in which reactive group of a dye is not readily decomposed during storage is obtained by containing in a liquid composition of a reactive dye a compound represented by the formula (1):

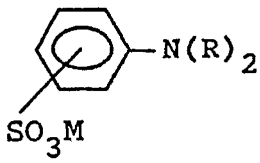

(1)

wherein M represents an alkali metal and R represents an alkyl, and besides, when cellulose fibers are dyed with the liquid composition, dyed products having excellent dyeing properties and fastness properties are provided.

The reactive dyes used in the present invention are water-soluble reactive dyes having 1 or 2 active chlorine atoms and may simultaneously have a vinylsulfonyl group ($-SO_2CH_2CH_2OSO_3M$; M is an alkali metal or H). Examples thereof include those which are mentioned in Color Index. However, in the present invention, the reactive dye is not limited to only those dyes, but can be applied to water-soluble reactive dyes having the above-mentioned properties.

The compound represented by the formula (1) is generally added in the form of alkali salt, but may be added in the form of sulfonic acid (-H), which is neutralized with an alkali agent containing an alkali metal. Examples of the compound represented by the formula (1) are shown below.

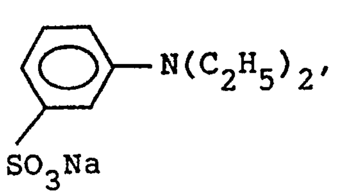

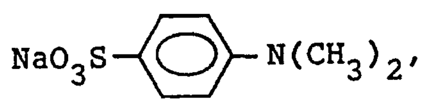

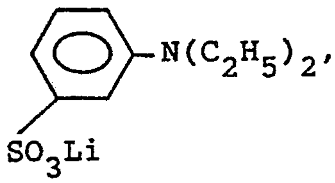

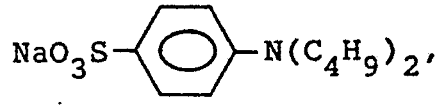

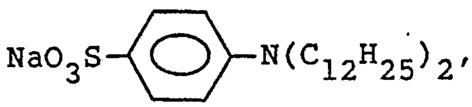

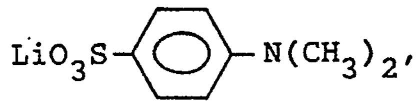

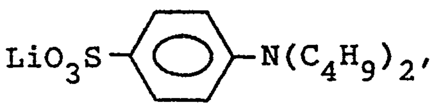

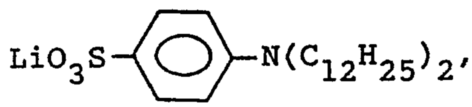

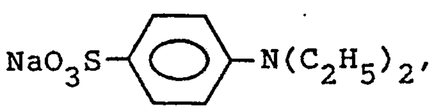

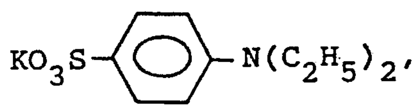

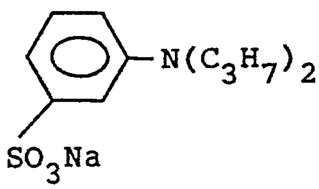

Among these compounds, preferred are those which contain Na or Li as M and methyl or ethyl as R in the formula (1).

It is desired to prepare the liquid composition of the present invention so that it contains 0.1-10.0% by weight, preferably 0.2-3.0% by weight of the compound of the formula (1), 5-60% by weight of dye in solid content and 30-95% by weight of water.

The liquid composition of the present invention is prepared by adding the compound of the formula (1), water and, if necessary, other additives to a reaction solution per se containing reactive dye or a press cake

of dye taken out by salting-out and stirring the resulting mixture. In order to further improve stability with time, it is also possible to prepare the liquid composition after the reaction solution containing reactive dye or the press cake of reactive dye taken out by salting-out has been subjected to desalting or concentrating procedure using separation membrane such as acetyl cellulose (AC) membrane or polybenzimidazolone (PBIL) membrane.

For still further improvement of stability with time, there may be carried out addition of a usual additive such as polyvinyl pyrrolidone or $\epsilon$-caprolactam or an additive such as polyacrylic acid salt as disclosed in Japanese Patent Application No. 60-43587 to the liquid composition prepared by the processes as mentioned above or adjustment of pH of the liquid composition to 6.0-8.5.

Next, dyeing method using the liquid composition of the present invention will be explained.

The liquid composition of the present invention is suitable for dyeing natural or regenerated cellulosic fibers or blended fibers of these cellulosic fibers with fibers other than cellulosic fibers. As dyeing methods, there may be employed those usually employed for dyeing with reactive dyes such as printing method, dipping method, and padding method.

In the case of printing method, normally, a color size is prepared from sodium alginate or emulsion size as base size to which are added the composition of the present invention, an acid binder, urea and the like. The resulting color size is printed on fibers and, if necessary, the fibers are subjected to intermediate drying and then, steaming or dyeing treatment to fix the dye. In this case, a color size containing no acid binder may be printed on fibers impregnated with an acid binder solution or a color size containing no acid binder may be printed on fibers and then the fibers may be treated with a solution containing an acid binder and thereafter the fibers may be treated in the same manner as above, thereby to fix the dye.

Next, when the composition of the present invention is applied under the conditions of relatively high bath ratio as in dipping method, dyeing is effected at 20-130 °C for 10-60 minutes in the presence of an inorganic salt such as sodium chloride or sodium sulfate, then an acid binder is added thereto, and further dyeing is effected at 30-100 °C for 20-60 minutes. In this case, there may be employed a method according to which acid binder is added from the first of dyeing.

When the composition of the present invention is applied under the condition of relatively low bath ratio as in padding method, fiber is padded in a padding bath prepared from dyes, acid binder, penetrating agent, urea as a dissolving agent, and sodium alginate as a migration inhibitor, squeezed, and then subjected to steaming or drying to fix the dye.

As examples of the acid binders used in the above dyeing methods, mention may be made of sodium hydrogencarbonate, sodium metaphosphate, trisodium phosphate, sodium ortho- or metasilicate, sodium carbonate and sodium hydroxide.

The thus obtained dyed products have excellent dyeing and fastness properties as mentioned above.

## BEST MODE FOR CARRYING OUT THE INVENTION

### Examples

The present invention will be explained in more detail.

In examples, "part" means part by weight and "%" means % by weight.

### Example 1

2 Kg of a reaction solution of a reactive dye metal complex salt represented by the following formula (2) which had dye content of 10% and inorganic salt content of 3% was desalted and concentrated by PBIL membrane MTL-230 (membrane area: 200 $cm^2$) manufactured by Teijin Engineering Co. At the time of membrane treatment, 3 Kg of deionized water was added to obtain totally 4.5 Kg of a permeation liquid. Thus, 500 g of concentrated liquid (A) was obtained which contained about 38% of the dye, 0.1% of NaCl and 0.1% of $Na_2SO_4$.

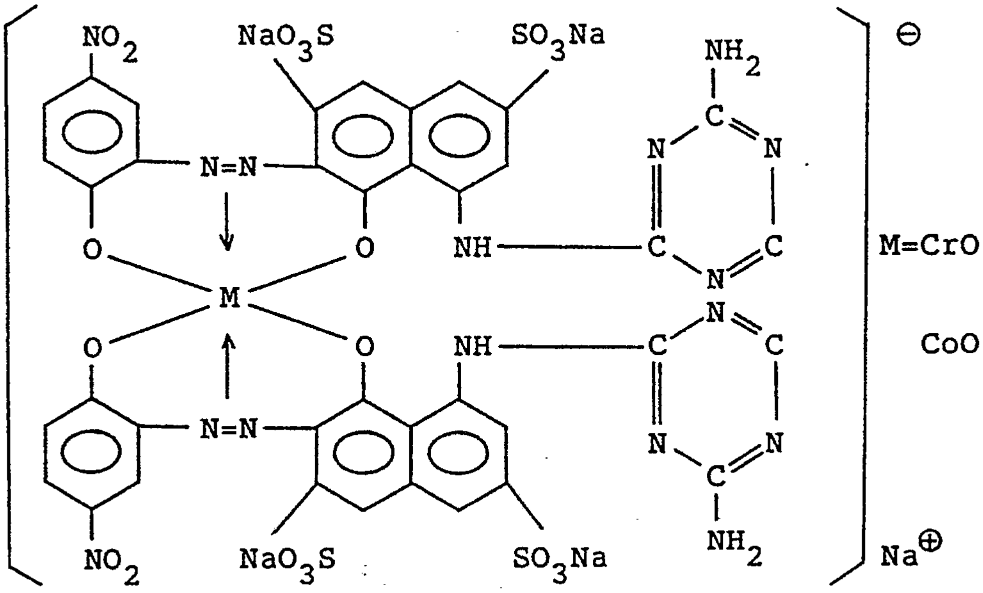

M=CrO. 7
CoO. 3

(2)

86.8 Parts of the above concentrated liquid (A), 2 parts of

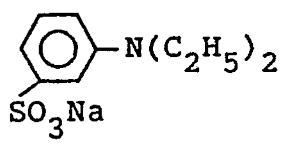 ,

and 11.2 parts of water were mixed with one another to obtain the liquid composition of the present invention. This reactive dye liquid composition had the following composition.

| | |
|---|---|
| The dye of the formula (2) | 33% |
| 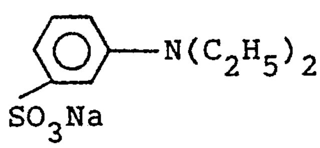 | 2% |
| NaCl | 0.1% |
| $Na_2SO_4$ | 0.1% |
| Water | 64.8% |

The resulting liquid composition just after preparation had a pH of 7.1 and was stable so that the composition did not change in properties even after storage for 6 months at a temperature from -5° C to +40° C. Results of dyeing test after the composition was subjected to accelerated storage rest at 60° C for 14 days are shown in Table 1. The results showed conspicuous improvement of storage stability.

Examples 2-5

Reactive dye liquid compositions were prepared using the reactive dye concentrated liquid (A) used in Example 1 with changing kind and amount of the additive of the formula (1) as shown in Table 1. The thus obtained composition were stored at a temperature of from -50° C to +40° C for 6 months. All of them were stable and no change in properties was recognized. Results of dyeing test after the composition was subjected to acceleration storage test. at 60° C for 14 days are shown in Table 1. Improvement in storage

stability was recognized.

Comparative Example 1

A liquid composition of the same concentration as in Example 1 was prepared by adding only water to the reactive dye concentrated liquid (A) used in Example 1. The resulting liquid composition was subjected to storage test at a temperature of from -5° C to +40° C. As a result, extreme decomposition of reactive group (-Cl) was recognized after 3 months. Insufficient storage stability was recognized also from the results of dyeing test after acceleration storage test at 60° C for 14 days (see Table 1).

Table 1 Kind and amount of additive and results of dyeing test after accelerated storage test

| | Additive | Amount*1 used | Degree*2 of dye exhaustion (%, PS/OD) |
|---|---|---|---|
| Example 1 | 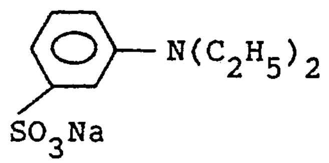 | 2 | 88 |
| Example 2 | 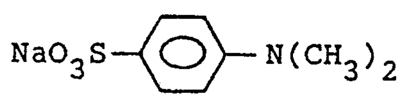 | 2 | 86 |
| Example 3 | 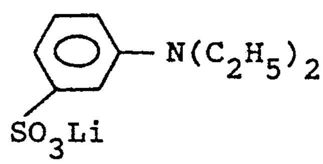 | 2 | 88 |
| Example 4 | 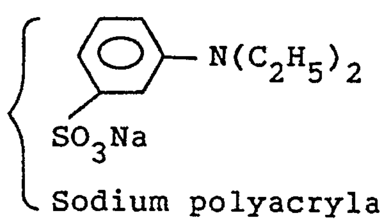<br>Sodium polyacrylate | 1<br>1 | 86 |
| Example 5 | 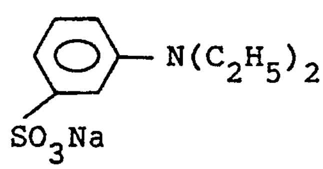 | 1 | 82 |
| Comparative Example 1 | None | 0 | 50 |

*1 Amount of water was such that total amount reached 100 parts. (The same applies to the followings.)

*2 Degree of dye exhaustion obtained with liquid composition just after preparation from reactive dye concentrated liquid (A) is presumed to the 100%. Dyeing method was the same as in Example 15.

Example 6

Press cake (B) of a reactive dye having a monochlorotriazine group was obtained by salting-out a reaction solution of the reactive dye represented by the following formula (3):

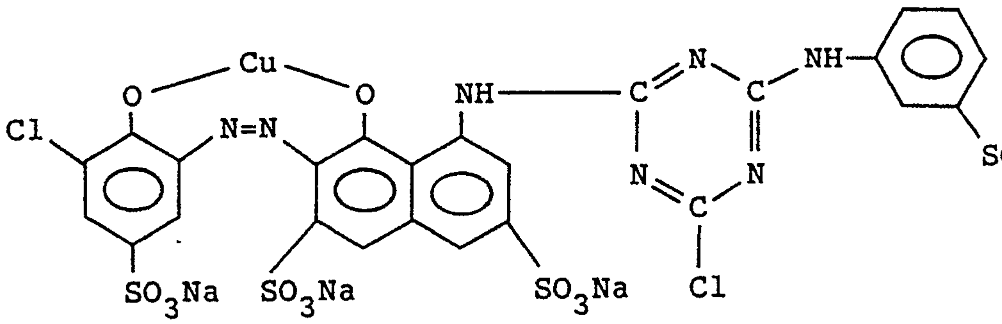

(3)

Dye content of the press cake was 50%.

To 30 parts of this press cake (B) were added 0.5 part of

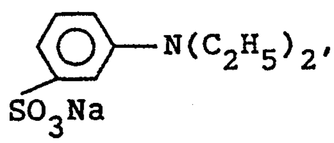

15 part of ε-caprolactam, and 54.5 parts of water, followed by stirring to obtain a reactive dye liquid composition having the following composition (pH of this composition was 7.0).

| | |
|---|---|
| The dye of the formula (3) | 15% |
| ε-Caprolactam | 15% |
| 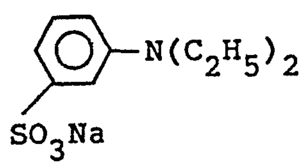 | 0.5% |
| NaCl | 4% |
| Water | 65.5% |

Examples 7 and 8

In accordance with Example 6, reactive dye liquid compositions of the present invention were prepared using press cake (B) with changing amount of the additive as shown in Table 2.

Comparative Example 2

A reactive dye liquid composition having the same composition except that the additive was not contained as shown in Table 2 was prepared in accordance with Example 6.

These liquid compositions obtained in Examples 6-8 and Comparative Example 2 were stored for 6 months at a temperature of from -5°C to 40°C. All of them were stable and showed no change in properties. However, results of dyeing test (degree of dye exhaustion) after the compositions were subjected to accelerated storage test at 60°C for 14 days are as shown in Table 2 and it can be seen that the liquid compositions of Examples 6-8 had an improved storage stability.

Table 2 Kind and amount of additive and results of dyeing test after accelerated storage test

| | Additive | Amount used (part) | Degree of dye exhaustion (%, PS/OD) |
|---|---|---|---|
| Example 6 | 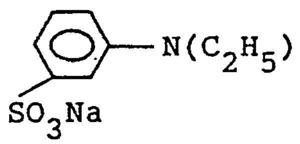 | 0.5 | 87 |
| Example 7 | Do | 1.0 | 90 |
| Example 8 | Do | 3.0 | 95 |
| Comparative Example 2 | None | 0 | 80 |

(Note): Degree of dye exhaustion is a value when degree of dye exhaustion of liquid composition just after preparation is presumed to be 100%. Dyeing method was in accordance with Example 15.

Example 9

Concentrated liquid (C) of reactive dye of the following formula (4) was obtained in accordance with Example 1. Dye content of the concentrated liquid was 35%. To 57.0 parts of this concentrated liquid (C) were added 0.2 part of

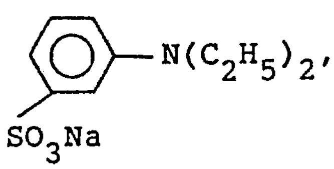

and then 42.8 parts of water, followed by stirring to obtain a liquid composition of the present invention. This liquid composition had the following composition.

| | |
|---|---|
| The dye of the formula (4) | 20% |
| 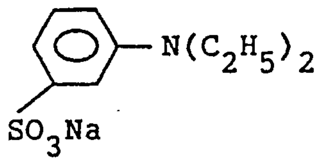 | 0.2% |
| NaCl | 1% |
| Water | 78.8% |

This liquid composition had a pH of 7.2.

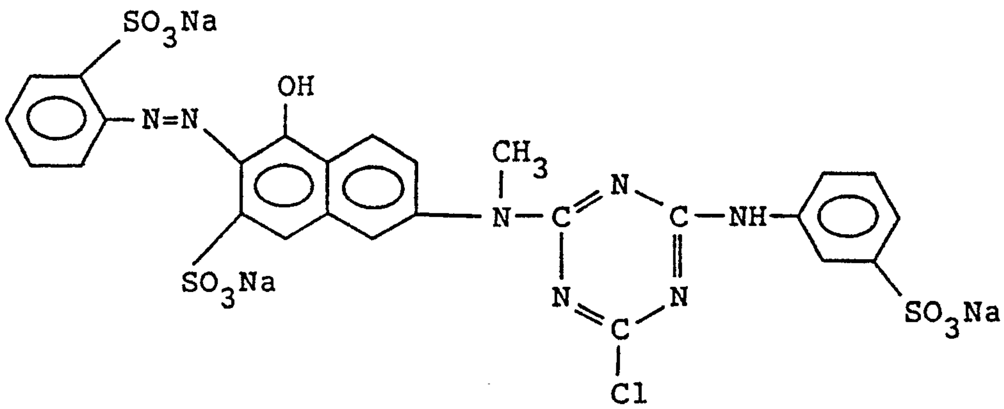

(4)

Examples 10-12

Reactive dye liquid compositions of the present invention were obtained in accordance with Example 9 using concentrated liquid (C) with adding various additives as shown in Table 3.

Comparative Example 3

A reactive dye liquid composition having the same composition as in Example 9 except that the additive was not contained as shown in Table 3 was prepared in accordance with Example 9.

These liquid compositions obtained in Examples 9-12 and Comparative Example 3 were stored for 6 months at a temperature of from 0° C to 40° C to find that all of them were stable and showed no change in properties. However, results of dyeing test (degree of dye exhaustion) after the compositions were subjected to accelerated storage test at 60° C for 28 days are as shown in Table 3. It can be seen that the liquid compositions of Examples 9-12 had an improved storage stability.

Table 3 Kind and amount of additive and results of dyeing test after acceleration storage test

| | Additive | Amount used (part) | Degree of dye exhaustion (%, PS/OD) |
|---|---|---|---|
| Example 9 | 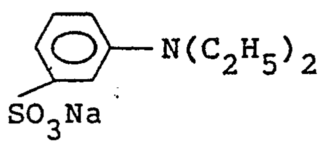 | 0.2 | 87 |
| Example 10 | Do | 1.0 | 90 |
| Example 11 | Do | 2.0 | 95 |
| Example 12 | 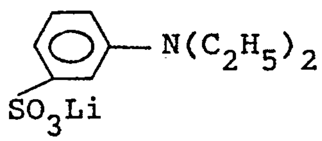 | 2.0 | 95 |
| Comparative Example 3 | None | 0 | 80 |

(Note): Degree of exhaustion is a value when that of reactive dye composition just after preparation is presumed to be 100% and dyeing method was in accordance with Example 15.

Example 13

A reactive dye liquid composition having the following composition was prepared using an aqueous solution of the reactive dye represented by the following formula (5) which had dye content of 20% and inorganic salt content of 0.5%.

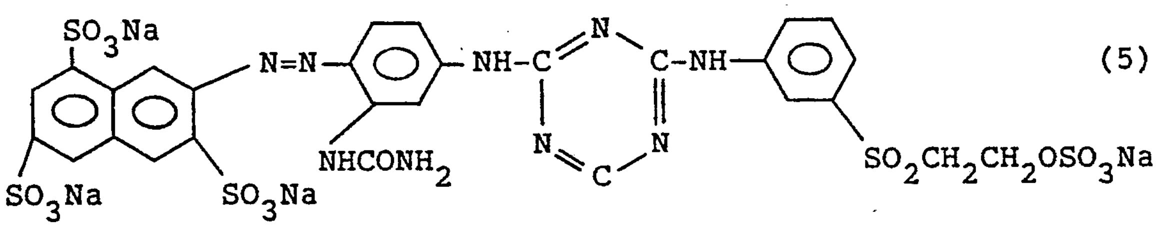

(5)

| | |
|---|---|
| The dye of the formula (5) | 15.0% |
| 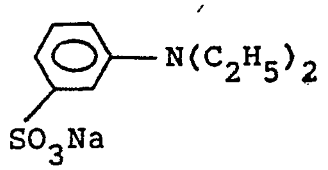 | 1.0% |
| NaCl | 0.4% |
| Water | 73.6% |

This liquid composition had a pH of 6.8.

Example 14

A reactive dye liquid composition of the following composition was prepared in the same manner as in Example 13.

| | |
|---|---|
| The dye of the formula (5) | 15.5% |
| 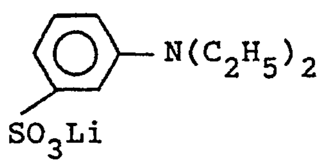 | 1.0% |
| NaCl | 0.4% |
| Water | 73.6% |

This liquid composition had a pH of 6.8

Comparative Example 4

A reactive dye composition having the same composition as in Examples 13 and 14 except that the additive of the present invention was not contained was prepared using aqueous solution of the reactive dye of the formula (5).

These liquid compositions obtained in Example 13 and Comparative Example 4 were stored for 2 months at a temperature of from 0 °C to 40 °C to find that they showed no change in properties. However, results of dyeing test (degree of dye exhaustion) after the compositions were subjected to an accelerated test at 60 °C for 14 days are as shown in Table 4 and it can be seen that the liquid compositions of Examples 13 and 14 had an improved storage stability.

Table 4 Kind and amount of additive and results of dyeing test after accelerated storage test

| | Additive | Amount used (part) | Degree of dye exhaustion (%, PS/OD) |
|---|---|---|---|
| Example 13 | 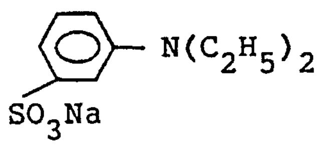 | 1.0 | 98 |
| Example 14 | 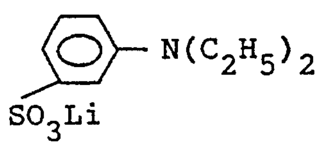 | 1.0 | 98 |
| Comparative Example 4 | None | 0 | 87 |

(Note): Degree of exhaustion is a value when that of reactive dye liquid composition just after preparation is presumed to be 100% and dyeing method was in accordance with Example 16.

Example 15

A color size of the following composition was prepared using the liquid composition of the present invention obtained in Example 1. The resulting color size was printed on a cotton fabric and subjected to steaming at 102°C for 10 minutes.

| | |
|---|---|
| Reactive dye liquid composition of Example 1 | 5 parts |
| 5% Aqueous sodium alginate solution | 50 parts |
| Urea | 5 parts |
| Sodium bicarbonate | 2 parts |
| Water | 38 parts |

A dyed cotton fabric printed in black was obtained by the above operation. This dyed fabric was washed with water, soaped and then dried to obtain a black printed (dyed) product.

Example 16

Dyeing was carried out by the following dyeing method using the liquid composition of the present invention obtained in Example 13.

50 Parts of an unmercerized cotton knit fabric was introduced into a dye bath having the following formulation:

| | |
|---|---|
| Liquid composition obtained in Example 13 | 2.5 parts |
| Anhydrous sodium sulfate | 80 parts |
| Water | 918 parts |

and was treated therein at 60 °C for 30 minutes. Thereafter, 20 parts of anhydrous sodium carbonate was added to the dye bath and dyeing was carried out at the same temperature for 60 minutes. Then, the dyed product was washed with water, soaped and dried to obtain a reddish yellow dyed fabric.

## Claims

1. A liquid composition of a reactive dye, characterized by containing a compound represented by the following formula (1):

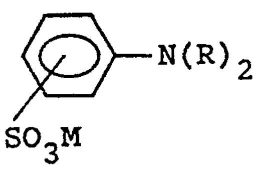

(1)

wherein M represents an alkali metal and R represents an alkyl.

2. A liquid composition according to claim 1, wherein the compound represented by the formula (1) is

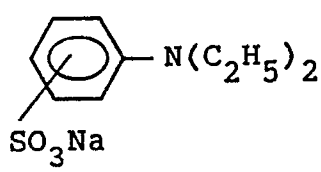

3. A liquid composition according to claim 2, wherein the compound represented by the formula (1) is

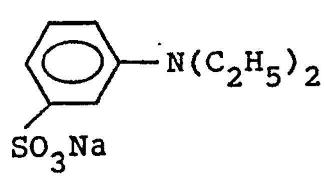

4. A method for dyeing cellulose fiber, characterized by using the liquid composition of claim 1.

# INTERNATIONAL SEARCH REPORT

International Application No PCT/JP90/00337

**I. CLASSIFICATION OF SUBJECT MATTER** (if several classification symbols apply, indicate all) [6]

According to International Patent Classification (IPC) or to both National Classification and IPC

Int. $Cl^5$ C09B67/26, D06P3/66

**II. FIELDS SEARCHED**

Minimum Documentation Searched [7]

| Classification System | Classification Symbols |
|---|---|
| IPC | C09B67/26, D06P3/66 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | US, A, 3,103,504 (Imperial Chemical Industries Ltd.), 10 September 1963 (10. 09. 63), Lines 14 to 31, column 3 & DE, B1, 1,127,324 | 1 - 4 |
| X | US, A, 4,472,168 (ICI Americas Inc.), 18 September 1984 (18. 09. 84), Lines 20 to 38, column 9 & EP, A1, 130,711 & DE, A1, 3,462,372 | 1 - 4 |
| X | JP, A, 51-95432 (Imperial Chemical Industries Ltd.), 21 August 1976 (21. 08. 76), Lines 24 to 32, column 8 & DE, A1, 2,600,490 & FR, A1, 2,297,232 & GB, A, 1,477,071 | 1 - 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 26, 1990 (26. 04. 90) | May 14, 1990 (14. 05. 90) |
| **International Searching Authority** | **Signature of Authorized Officer** |
| Japanese Patent Office | |